Europäisches Patentamt

(19) European Patent Office

Office européen des brevets

(11) Publication number: **0 116 694**
**B1**

# (12) EUROPEAN PATENT SPECIFICATION

(45) Date of publication of patent specification: **12.09.90**

(21) Application number: **83111761.9**

(22) Date of filing: **24.11.83**

(51) Int. Cl.⁵: **G 06 F 9/44,** G 06 F 9/46

(54) Method for dynamically reconfiguring a data processing system for added devices.

(30) Priority: **22.02.83 US 468514**

(43) Date of publication of application:
**29.08.84 Bulletin 84/35**

(45) Publication of the grant of the patent:
**12.09.90 Bulletin 90/37**

(84) Designated Contracting States:
**DE FR GB**

(56) References cited:

IBM TECHNICAL DISCLOSURE BULLETIN, vol.
24, no. 11B, April 1982, pages 5867-5868, New
York, US; T.L. ADAM et al: " Varying work
station and printer programs
IBM TECHNICAL DISCLOSURE BULLETIN, vol.
14, no. 8, January 1972, pages 2356-2357, New
York, US; N.J. BARILICS: " Initial configuration
section of standalone and oline support
processor (SOSP)"

(73) Proprietor: **International Business Machines
Corporation
Old Orchard Road
Armonk, N.Y. 10504 (US)**

(72) Inventor: **Crabtree, Robert Pierre
3013 Hickory Hill
Calleyville Texas, 76034 (US)**
Inventor: **Kelly, Keith Franklin, Jr.
4034 Hockaday
Dallas Texas, 75229 (US)**

(74) Representative: **Bonneau, Gérard
Compagnie IBM France Département de
Propriété Intellectuelle
F-06610 La Gaude (FR)**

(56) References cited:
IBM TECHNICAL DISCLOSURE BULLETIN, vol.
25, no. 3A, August 1982, pages 904-905, New
York, US; H.L. KURTZ et al.: "Intermediate
status/control feature"

Courier Press, Leamington Spa, England.

## Description

This invention relates generally to adding devices to a data processing system, and more specifically to a method of dynamically reconfiguring the system during operation such that the added devices are immediately available for use by the system.

Adding devices in today's environment to a data processing system made up of a multi-ported computing installation typically involves intricate detail and elaborate operations. The use of the term adding is not meant to include a physical hardware connecting operation. In fact, it is to be assumed that a preliminary operation has been performed and to-be-added devices are already cable connected and/or plugged in. With this in mind, the term adding is meant to include the operation of defining the devices to the operating system in use by the processing system such that the devices can be used by the operating system. In addition to defining new devices, also contemplated is the redefining of existing devices. The devices contemplated include keyboard/display input/output (I/O) terminals, direct access devices, tape units, printers, card readers, card punch units, etc.

For this, a system generation or SYSGEN operation is necessary: writing detailed source code statements defining a device to be added or redefined and also the related control units and channels to be affected by the device, compiling the source code statements, and combining the resulting object code modules with other operating system components to generate a new operating system base. One solution in attempting to eliminate the need for the SYSGEN operation is to predefine large numbers of potential devices at specific addresses. However, there are practical upper limits on the number of each device type which can be defined in this way. Also, device addresses must then be changed when new features are added to the devices. Further, and more importantly, the resources which are required in the operating system to define all unused devices are wasted from the time of the initial system installation until the time devices are actually physically attached.

A system which presents an advance over the prior technique is described in the article of BARILICS "Initial configuration section of standalone and online support processor", published in the IBM Technical Disclosure Bulletin, vol. 14, no. 8, 1972 pp. 2356—2357, in that the system can be reconfigured on-line. However, in this system, the module which allows the user to dynamically configure the system, is used in a special processor which runs under the control of the module, the user calls the appropriate control program and indicates that he wants to run the special processor. At this time, the processor is called in and control is passed to the module which then communicates directly with the user.

Therefore, the present invention relates to a method of on-line reconfiguring a data processing system by redefining an added device to the operating system, without the use of a special processor as in the above prior system.

The method of the invention is a unique method of reconfiguring a data processing system for an added or redefined device, eliminating the need for 1) a system programmer having to construct complex detailed device, and related control unit and channel, definitions, and having to encode the definitions as source statements as inputs to a system generation compiler program, 2) remaining time and resource consuming SYSGEN tasks, 3) loss in time and resources resulting from disruption caused by subsequent testing operations, and 4) disruption and inconvenience caused by having to reload and reinitialize an operating system being used by the data processing system.

The method according to the invention comprises the steps of building a definition for the added device based on keying on the keyboard and menu selection, and storing a control block in main storage for the system based on said definition. In response to the built definition, the system determines the status of the device as being redefined and not currently in use, or redefined and currently in use, and if the device is redefined and not currently in use replaces the old control block by a new control block, or if the device is redefined and currently in use, stores a redefined control block in main storage to replace the old control block when said device is no longer in use at a later time.

Because the configuration program is in a position to structure, restrict, and check the built device definitions and because the remainder of the operating system supervisor is unaffected by addition or redefinition of a device, the need for any testing is substantially reduced, if not eliminated. Also because the device is immediately available to the system, the need to reload and reinitialize the operating system is eliminated.

In the article of ADAM a.o. "Varying Work Station and Printer Programs" in the IBM Technical Disclosure Bulletin, Vol. 24, No. 11B, April 1982, pp. 5867—5868 is also shown a system permitting redefinition of a device during use of the device. But replacement takes place only at subsequent initial program load and not automatically.

An embodiment of the invention will now be described in reference to the drawings wherein:

FIG. 1 is a block diagram illustrating prior art chores necessary in reconfiguring a system for an added device.

FIG. 2 is a block diagram illustrating the method of this invention for adding a printer to a system.

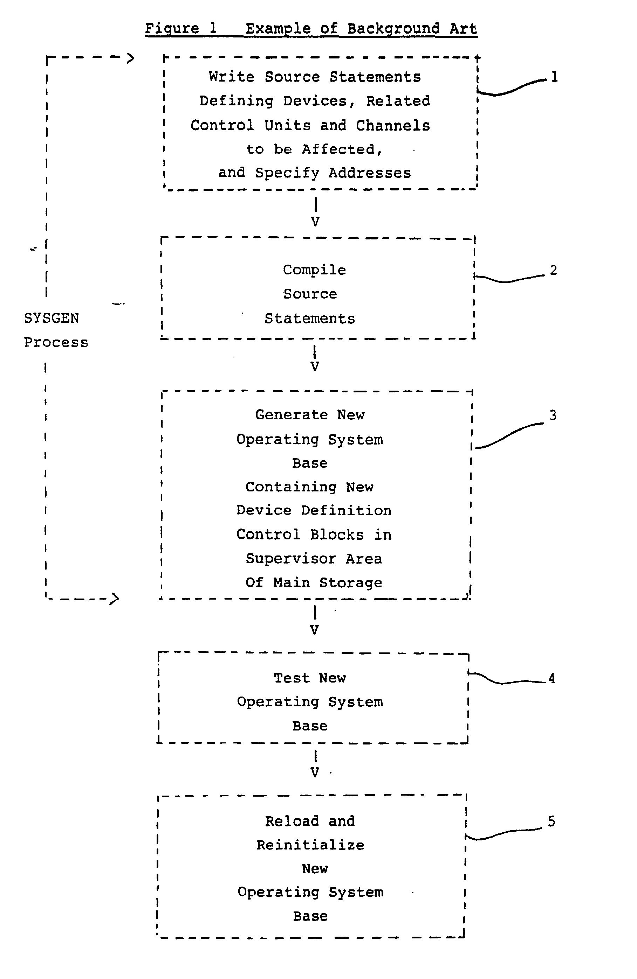

Figure 1 depicts the system programmer operations referred to as the SYSGEN operations writing detailed source code statements defining a device to be added or redefined and also the related control units and channels to be affected by the device, compiling the source code statements, and combining the resulting object code modules with other operating system components to generate a new operating system base in the blocks 1, 2, 3 respectively. Because of the complexity of this process, there is a probability that mistakes will occur and it is usually prudent to subject the new operating system base to a degree of testing, as indicated by block 4, prior to its use in a production environment. This testing time represents time in which the computing installation or system is not available for its normal purpose.

At a very minimum, it is necessary to reload and reinitialize the operating system, as indicated by block 5, before the added or redefined device can be used. If the operating system, due to a mistake or whatever reason, fails to accept the definition, the system programmer operations must be repeated. Not only is system programmer time and effort costly, the effects of a down system can be disastrous.

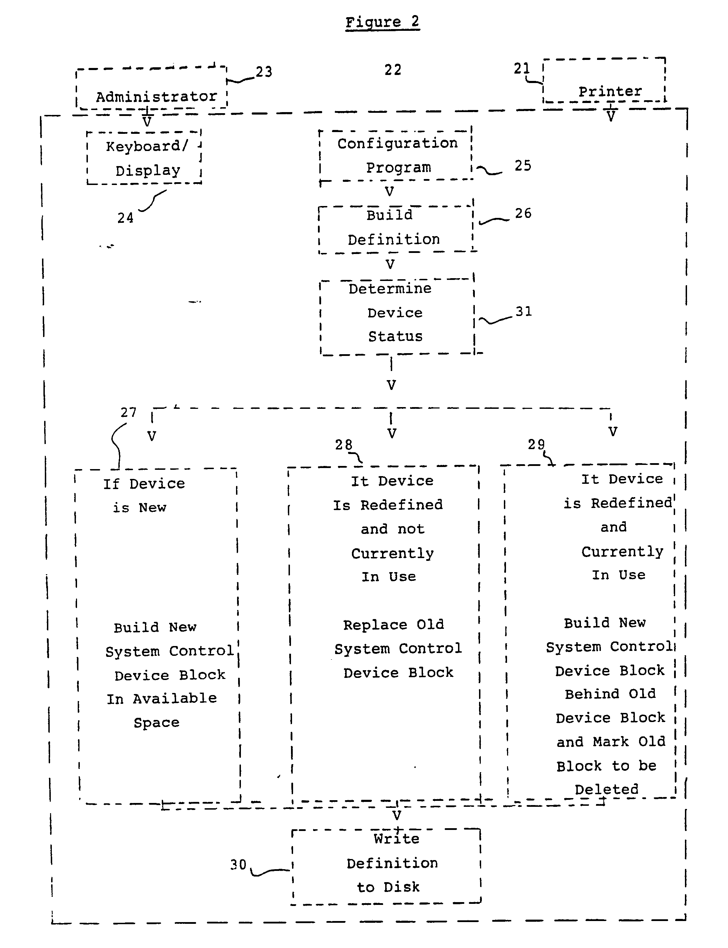

Reference is now made to FIG. 2 for an understanding of the invention. First, it is to be assumed that a newly available printer 21 is to be added to a data processing system 22 and utilized by an in-use operating system. After printer 21 has been cable connected to system 22, a system administrator 23 will use a keyboard/display I/O terminal 24 and call a configuration program 25. Program 25 causes a menu and/or screen presentation to administrator 23. Based upon menu selections and screen keying by administrator 23, a definition for printer 21 is built by program 26. The limited keying contemplated by administrator 23 includes a device address, selection of a device type, and a new or redefined device status. Program building of definitions, etc., based on menu selections and screen keying is well within the skill of one in the art. As such, details of such a program have been omitted for purposes of conciseness and clarity.

A control block is constructed to represent the device to operating system 22. This constructed block is either added to existing control blocks in main storage, or is used to replace an existing block. These operations are represented by blocks 27 and 29, and 28, respectively. More specifically, if printer 21 is new 27, a new control block is built. If printer 21 is redefined, and is not in use (allocated) at the time of the redefinition 28, the old control block is replaced or written over with the newly constructed control block. If the device is redefined and is in use at the time of the redefinition 29, a new control block is built and placed behind the old control block, and the old control block is marked in such a way that when the device is no longer being used, the old control block will be deleted.

The new or redefined status of printer 21 is initially determined by administrator keying. Prior to building a control block, this status is determined as represented by block 31. Status determination also extends to use and non-use of a redefined device. That is, if printer 21 is being redefined and is not currently in use, this use status will determine, as set out above, that the old control block is to be written over or replaced with the newly built control block. The marking of the old control block can be by setting a particular bit or series of bits which are recognizable by the operating system for causing the old control block to be deleted when its associated device is unallocated or no longer in use.

The built definition for printer 21 is also stored on a disk 30 as part of a catalog or file of other device definitions for devices in use by operating system 22. This permits the device definitions to be recreated in event of a power down situation, or any other occurrence where the contents of main storage are erased or lost. Also, the disk file is updated as necessary by the operating system to cause the disk file to match the control block section of main storage. This is a normal operating system capability and is initiated for purposes of this invention based on device status as discussed above.

As with program building of definitions, the building and storing of control blocks in main storage is well within the skill of one in the art. As such, further detail is not considered warranted.

From the above, the major prior art management problems of system downtime and wasted responses are overcome. A system can now be dynamically reconfigured, during operation, for an added device, and the added device is immediately available for use by the system.

In summary, a unique method of reconfiguring a system for an added device is provided. The method includes calling a configuration program which causes menus to be presented to a display terminal. Based on menu selections and other keying at the display terminal, the program causes a device definition to be built for a device to be added to the system. The program also builds definitions for any related control units and channels implied or required by the device definition. The definitions are then stored in a control block section of system main storage. The definitions are also written into, or onto, a secondary store for control block recreation in the event of a power down situation.

**Claims**

1. A method of on-line reconfiguring a data processing system by the operation of defining an added device to the operating system of the processing system during the operation of said data processing system, said processing system including a keyboard, a display and a configuration program (25) which causes menus to be presented on said display; said method comprising the steps of building (26) a definition for said device based on keying on said keyboard and menu selection, and storing (27, 28, 29) a control block in main storage for said system based on said definition,

said method of reconfiguring being characterized in that said system, in response to said built definition determines (31), the status of said device as being redefined and not currently in use, or redefined and currently in use, and if said device is redefined and not currently in use, replaces (28) the old control block by a new control block or if said device is redefined and currently in use, stores (29) a redefined control block in main storage to replace the old control block when said device is no longer in use at a later time.

2. A method according to Claim 1 including, if said defined device has a status as a new device to said system, adding (27) said control block to said main storage.

3. A method according to Claim 1 including, if said device is redefined, replacing (28) said control block for said device being redefined by writing over said control block for said device being redefined with said redefined control block.

4. The method according to Claim 1 including writing (29) said redefined control block behind said control block for said device being redefined if said device being redefined has a status of being used.

5. The method according to Claim 4 including marking said device control block for said device being redefined.

6. The method according to Claim 5 including deleting said device control block for said device being redefined when said device being redefined has a status of being no longer in use.

7. The method according to Claim 6 including storing said device definition in a secondary store such as a disk.

8. The method according to Claim 7 including updating said secondary store to include an updated catalog of definitions of devices in use by said system.

**Patentansprüche**

1. Verfahren zur Online-Rekonfiguration eines Datenverarbeitungssystems durch den Arbeitsgang der Definition einer Zusatzvorrichtung zu dem Betriebssystem des Verarbeitungssystems während des Arbeitsganges des genannten Datenverarbeitungssystems, wobei das genannte Verarbeitungssystem eine Tastatur, einen Bildschirm und ein Konfigurationsprogramm (25) beinhaltet, welches die Darstellung von Menüs auf dem genannten Bildschirm veranlasst; wobei das genannte Verfahren die Schritte der Erstellung (26) einer Definition für die genannte Vorrichtung, welche auf Tastenbetätigung auf der genannten Tastatur und Menü-Auswahl beruht, und der Speicherung (27, 28, 29) eines Steuerblocks im Arbeitsspeicher für das genannte System, welches auf der genannten Definition beruht, beinhaltet,

wobei das genannte Verfahren zur Rekonfiguration dadurch gekennzeichnet ist, dass das genannte System bestimmt (31) als Reaktion auf die genannte gebildete Definition, den Zustand der genannten Vorrichtung als redefiniert und gegenwärtig nicht in Gebrauch oder redefiniert und gegenwärtig in Gebrauch, und wenn die genannte Vorrichtung redefiniert und gegenwärtig nicht in Gebrauch ist, den alten Steuerblock durch einen neuen Steuerblock ersetzt (28) oder, wenn die genannte Vorrichtung redefiniert und gegenwärtig in Gebrauch ist, einen redefinierten Steuerblock im Arbeitsspeicher speichert (29), um den alten Steuerblock zu ersetzen, wenn die genannte Vorrichtung zu einem späteren Zeitpunkt nicht länger in Gebrauch ist.

2. Verfahren nach Anspruch 1, enthaltend, wenn die genannte definierte Vorrichtung einen Zustand wie eine neue Vorrichtung zu dem genannten System hat, die Addierung (27) des genannten Steuerblocks zu dem genannten Arbeitsspeicher.

3. Verfahren nach Anspruch 1, enthaltend, wenn die genannte Vorrichtung redefiniert ist, die Ersetzung (28) des genannten Steuerblocks für die genannte zu redefinierende Vorrichtung durch Überschreiben des genannten Steuerblocks für die genannte zu redefinierende Vorrichtung mit dem genannten redefinierten Steuerblock.

4. Verfahren nach Anspruch 1, enthaltend das Schreiben (29) des genannten redefinierten Steuerblocks hinter den genannten Steuerblock für die genannte zu redefinierende Vorrichtung, wenn die genannte zu redefinierende Vorrichtung einen benutzt zu werdenden Zustand aufweist.

5. Verfahren nach Anspruch 4, enthaltend die Markierung des genannten Vorrichtungssteuerblocks für die genannte zu redefinierende Vorrichtung.

6. Verfahren nach Anspruch 5, enthaltend das Löschen des genannten Vorrichtungssteuerblocks für die genannte zu redefinierende Vorrichtung, wenn die genannte zu redefinierende Vorrichtung einen nicht länger benutzt zu werdenden Zustand aufweist.

7. Verfahren nach Anspruch 6, enthaltend die Speicherung der genannten Vorrichtungsdefinition in einem Sekundärspeicher wie beispielsweise eine Platte.

8. Verfahren nach Anspruch 7, enthaltend die Aktualisierung des genannten Sekundärspeichers zur Einbeziehung eines aktualisierten Katalogs von durch das genannte System in Gebrauch befindlichen Vorrichtungsdefinitionen.

**Revendications**

1. Procédé pour modifier en temps réel la configuration d'un système de traitement de données en définissant un dispositif ajouté au système d'exploitation du système de traitement de données pendant que ce dernier fonctionne, ledit système de traitement de données comprenant un clavier, une unité d'affichage et un programme de configuration (25) qui provoque l'affichage de menus sur ladite unité d'affichage, ledit procédé comprenant les étapes suivantes: construction (26) d'une définition dudit dispositif basée sur la frappe de données au clavier et sur une sélection de menu, et stockage (27, 28, 29) dans la mémoire principale dudit système d'un bloc de commande basé sur ladite définition,

ledit procédé de modification de configuration étant caractérisé en ce que ledit système, en réponse à la construction de ladite définition, détermine (31) l'état dudit dispositif comme étant redéfini et actuellement inutilisé ou comme étant redéfini et actuellement utilisé, et, si ledit dispositif est redéfini et actuellement inutilisé, remplace (28) l'ancien bloc de commande par un nouveau bloc de commande, ou, si ledit dispositif est redéfini et actuellement utilisé, stocke (29) dans la mémoire principale un bloc de commande redéfini pour remplacer l'ancien bloc de commande si ledit dispositif n'est plus utilisé ultérieurement.

2. Procédé selon la revendication 1, comprenant, si l'état dudit dispositif défini est celui d'un nouveau dispositif ajouté audit système, l'addition (27) dudit bloc de commande au contenu de ladite mémoire principale.

3. Procédé selon la revendication 1, comprenant, si ledit dispositif est redéfini, le remplacement (28) dudit bloc de commande pour ledit dispositif faisant l'objet d'une redéfinition en écrivant à sa place ledit bloc de commande redéfini.

4. Procédé selon la revendication 1, comprenant l'écriture (29) dudit bloc de commande redéfini derrière ledit bloc de commande pour ledit dispositif faisant l'objet d'une redéfinition si l'état de ce dernier est celui dans lequel il est actuellement utilisé.

5. Procédé selon la revendication 4, comprenant l'identification dudit bloc de commande de dispositif pour ledit dispositif faisant l'objet d'une redéfinition.

6. Procédé selon la revendication 5, comprenant l'effacement dudit bloc de commande de dispositif pour ledit dispositif faisant l'objet d'une redéfinition lorsque ce dernier est dans l'état dans lequel il n'est plus utilisé.

7. Procédé selon la revendication 6, comprenant le stockage de ladite définition de dispositif dans une mémoire secondaire telle qu'un disque.

8. Procédé selon la revendication 7, comprenant la mise à jour de ladite mémoire secondaire pour inclure un catalogue mis à jour de définitions de dispositifs utilisés par ledit système.

**EP 0 116 694 B1**

## Figure 1   Example of Background Art

Figure 2

```
┌─ ─ ─ ─ ─ ─ ─ ─┐ ⌐23            22          21 ┌─ ─ ─ ─ ─ ─ ─ ─┐
│  Administrator │                               │    Printer     │
└─ ─ ─ ─┬─ ─ ─ ─┘                               └─ ─ ─ ─┬─ ─ ─ ─┘
        V                                                V
   ┌─ ─ ─ ─ ─ ─ ┐           ┌─ ─ ─ ─ ─ ─ ─ ─┐
   │  Keyboard/ │           │ Configuration │
   │  Display   │           │   Program     │⌐ 25
   └─ ─ ─ ─ ─ ─ ┘           └─ ─ ─ ─┬─ ─ ─ ─┘
      24                            V
                            ┌─ ─ ─ ─ ─ ─ ─ ─┐  26
                            │    Build      │
                            │  Definition   │
                            └─ ─ ─ ─┬─ ─ ─ ─┘
                                    V
                            ┌─ ─ ─ ─ ─ ─ ─ ─┐
                            │  Determine    │
                            │   Device      │⌐ 31
                            │   Status      │
                            └─ ─ ─ ─┬─ ─ ─ ─┘
                                    V
```

| If Device is New | It Device Is Redefined and not Currently In Use | It Device is Redefined and Currently In Use |
|---|---|---|
| Build New System Control Device Block In Available Space | Replace Old System Control Device Block | Build New System Control Device Block Behind Old Device Block and Mark Old Block to be Deleted |

27                      28                      29

```
                        V
               ┌─ ─ ─ ─ ─ ─ ─ ─┐
               │    Write      │
           30  │  Definition   │
               │   to Disk     │
               └─ ─ ─ ─ ─ ─ ─ ─┘
```